Europäisches Patentamt

European Patent Office

Office européen des brevets

(19)

(11) **EP 0 694 574 A1**

(12) **EUROPÄISCHE PATENTANMELDUNG**

(43) Veröffentlichungstag:
31.01.1996 Patentblatt 1996/05

(51) Int. Cl.6: **C08J 3/20**, C08J 3/18,
C09K 21/00

(21) Anmeldenummer: 95109326.9

(22) Anmeldetag: 16.06.1995

(84) Benannte Vertragsstaaten:
AT BE CH DE DK ES FR GB IT LI NL SE

(30) Priorität: 24.06.1994 DE 4422162

(71) Anmelder: **Dr. Wolman GmbH**
**D-76547 Sinzheim (DE)**

(72) Erfinder: **Stanek, Richard, Dr.**
**D-76448 Durmersheim (DE)**

(74) Vertreter: **Karau, Wolfgang, Dr.**
**D-67056 Ludwigshafen (DE)**

(54) **Verfahren zur Herstellung von brandschützenden Verbundwerkstoffen**

(57) Verfahren zur Herstellung von brandschützenden Verbundwerkstoffen unter Verwendung von hochkonzentrierten Intumeszenzplastisolen, dadurch gekennzeichnet, daß zunächst die Feuerschutzkomponenten in einem schnellaufenden Mischer in die Weichmacher dispergiert werden und die erhaltene homogene Paste, ggf. nach Abkühlung durch Zugabe von Kunstharz in einem langsam laufenden Mischer in ein hochkonzentriertes Intumeszenzplastisol überführt wird.

EP 0 694 574 A1

**Beschreibung**

Die vorliegende Erfindung betrifft ein Verfahren zur Herstellung von brandschützenden Verbundwerkstoffen unter Verwendung von hochkonzentrierten Intumeszenzplastisolen und deren Verwendung im baulichen Brandschutz.

Als Intumeszenzmassen werden Materialien bezeichnet, die unter Hitzeeinwirkung aufschäumen und dabei einen isolierenden und feuerbeständigen Schaum ("Thermoschaum") bilden, der die darunter liegenden Flächen und Substrate vor der Feuereinwirkung schützt. Neben der klassischen Dreiermischung Kohlestoffspender, Dehydrationsmittel und Treibmittel, z.B. Zucker, Ammoniumphosphat und Melamin, sind auch Zweikomponentensysteme entwickelt worden wie z.B. Melaminphosphat in Mischung mit Borsäure und zunehmend kommen auch Einkomponenten Materialien zum Einsatz. Zu den letzteren zählen neben den altbekannten Alkalisilikaten "Wasserglas" auch Blähglimmer, Blähgraphit, Perlit, Rohvermiculit u.a.

Die Verwendung der Intumeszenzmassen im baulichen Brandschutz erfolgt in Form von Anstrichen, Lakken, Beschichtungen, Pasten, Kitten, Mörteln, Dichtungen, Platten, Zuschnitten, Streifen, Schaumstoffen, Bahnen, Folien, Profilen u.a. Halbzeugen.

Mit dem Einsatz von Intumeszenzmassen (auch Dämmschichtbildner genannt) wird versucht, die Feuerwiderstandsfähigkeit von Bauteilen oder Sonderbauteilen zu verbessern oder auch eine bessere Brandklassifikation von Baustoffen zu erreichen.

Aus der Vielzahl der derzeit bekannten Intumeszenzprodukten erscheint eine nähere Betrachtung der erst seit ein paar Jahren bekannten, intumeszierenden Kunststoffen insofern sinnvoll, als damit eine relevante Abgrenzung zum bekannten Stand der Technik und damit auch das erfinderische Niveau der vorliegenden Erfindung dokumentiert werden kann.

Intumeszierende Kunststoffe werden dabei aus rieselfähigen Mischungen von Feuerschutzkomponenten und thermoplastischer Kunststoffmatrix zu Halbzeugen in Form von Profilen, Streifen und Bahnen entweder extrudiert oder in Form von Folien kalandriert (DE 37 27 271 bzw. EP 0 256 967, EP 0 302 987, EP 0 541 504). Durch ihre hohe Flexibilität können Sie auch zum Schutz von zylindrischen, runden und kugelförmigen Bauteilen eingesetzt werden. Eine sinnvolle Anwendung finden sie u.a. in Brandschutzman-schetten oder Profilen für den Kantenschutz. Bedingt durch die Kunststoffmatrix können sie auch Verwendung in diesen Bereichen finden, wo mechanische Beanspruchungen, wie Druck-, Zug- und Biegekräfte sich auf die eingesetzten Produkte auswirken. Beim Versuch, intumeszierende Folien oder Bahnen auch zum Schutz von großflächigen Vertikalelementen, wie z.B. Gefahrgutbehälter einzusetzen, zeigten sich jedoch schnell die Grenzen dieser neuen Produktgruppe. Durch Hitzeeinwirkung kommt es zum Aufreissen der thermoplastischen Materialien, was eine sehr aufwendige, flächige Verankerung notwendig macht.

Des weiteren macht sich hier eine weitere Eigenschaft der thermoplastischen Matrix negativ bemerkbar. Es ist bekannt, daß der unter Hitzeeinwirkung entstehende Thermoschaum unter vertikalen Einsatzbedingungen zum Abrutschen neigt. Diese Abrutschtendenz ist bei verschiedenen Dämmschichtbildnern unterschiedlich stark ausgeprägt, verstärkt sich aber proportional zum Aufschäumfaktor. Diese an sich bekannten Eigenschaften führten u.a. dazu, daß intumeszierende Feuerschutzprodukte zusätzlich auch unter den Bedingungen der sogenannten Schweltemperaturkurve gemäß $V - V_0 = 345 \lg (8(t-20)+1)$ getestet werden müssen.

Bei Prüfungen mit großdimensionierten Bauteilen zeigte sich schnell, daß durch den hohen Anteil einer thermoplastischen Matrix der größte Teil der anschmelzenden Masse nach unten abfließt und dadurch am oberen Teil der Prüfkörper eine unzulässige Temperaturerhöhung stattfindet. Eine naheliegende Rezeptänderung durch Zugabe von faserigen Komponenten ist technisch nicht machbar, da es sich hierbei um hochgefüllte Massen handelt, die an der Grenze ihrer Fließfähigkeit verarbeitet werden.

Um eine Mischung mit beispielhaft 0,5 Gew.-% faserigen Komponenten extrudieren zu können, müssen die anderen brandschützenden Komponenten um den Faktor 10 bis 20 zurückgenommen werden. Durch den höheren Anteil der wegschmelzenden Kunststoffmatrix, wird der durch die Fasern erreichte Stabilisierungseffekt wieder aufgehoben. Als zusätzlicher Nachteil derartig armierter Massen erweist sich deren erhöhte Brennbarkeit und damit verbundene schlechtere Brandklassifizierung.

Ähnliche Probleme ergeben sich beim Versuch, intumeszierende Kunststoffe über die Plastisol Technik zu entwickeln.

Ein PVC-Standardplastisol (100 Gew.-Teile PVC-Pulver, 56 Gew.-Teile Weichmacher und 1,5 Gew.-Teile Stabilisator) läßt sich unter normalen Umständen mit bis zu 25 Gew.-% pulvrigen Komponenten verfüllen, ohne daß die Rakelfähigkeit nennenswert beeinträchtigt wird.

Bei niedrigviskos eingestellten PVC-Plastisolen liegt der Grenzwert der Verfüllung bei max. 30 Gew.-%. Beim Ansetzen von höher verfüllten Mischungen im Planetenrührwerk bilden sich Agglomerate, die auch nach längeren Mischzeiten nicht aufgelöst werden können. Auch eine nachträgliche Behandlung auf dem Drei-Walzen-Stuhl ergibt keine einwandfrei homogene Mischung. Diese kann zwar durch das Dispergieren im Schnellrührwerk erreicht werden, nur führt hier die Reibungswärme zu einer Angelierung der Paste, die deren Verarbeitbarkeit im Rakelauftrag, reversen Roll-Coater Beschichtung oder Rotationssiebdruck verhindert oder zumindest stark erschwert.

Darüber hinaus erreichen die mit diesen Anteilmengen gefertigten Kunststoffmassen nicht annähernd die wichtigsten brandschützenden Eigenschaften (Aufschäumfaktor, Blähdruck, Brandklassifikation) der thermoplastisch hergestellten, hochgefüllten (Verfüllungsgrad 40 - 60 Gew.-%) Feuerschutzprodukte.

Es war daher Aufgabe der vorliegenden Erfindung ein Verfahren zu entwickeln, mit dem hochkonzentrierte Intumeszenzplastisole bereitgestellt und im Verbund mit geeigneten Trägermaterialien zur Herstellung von brandschützenden Verbundwerkstoffen genutzt werden können.

Bei der Lösung dieser Aufgabe wurde unerwartet festgestellt, daß, wenn Weichmacher vor dem Kontakt mit Kunstharz zunächst als Dispergiermedium für die pulvrigen Komponenten verwendet werden, wesentlich höhere Konzentrationen der letzteren im Plastisol erreicht werden können. Die Homogenisierung der Feuerschutzkomponenten wird dabei durch die anquellenden Kunstharzpartikel nicht behindert.

Gegenstand der Erfindung ist hiermit ein Verfahren zur Herstellung von brandschützenden Verbundwerkstoffen unter Verwendung von hochkonzentrierten Intumeszenzplastisolen, bei dem zunächst die Feuerschutzkomponenten in einem schnellaufenden Mischer, in die Weichmacher und ggf. andere flüssige Bestandteile dispergiert werden und die erhaltene homogene Paste, ggf. nach Abkühlung durch Zugabe von Kunstharz in einem langsam laufenden Mischer in ein hochkonzentriertes Intumeszenzplastisol überführt wird.

Trotz des hohen Anteils der Feuerschutzkomponenten können diese Intumeszenzplastisole über die Rakeltechnik, die reverse Roll-Coater Beschichtung oder Rotationssieodruck mit unterschiedlichen Trägermaterialien zu den erfindungsgemäßen Verbundwerkstoffen verarbeitet werden.

Mit dem erfindungsgemäßen Verfahren ist somit die Herstellung von intumeszierenden ggf. auch blähdruckentwickelnden und wasserfesten, hochflexiblen und dynamisch belastbaren Verbundwerkstoffen, die den internationalen Anforderungen bezüglich der Schwerentflammbarkeit entsprechen und deren Thermoschaum im Brandfall durch die anderen Verbundkomponenten so nachhaltig gestützt wird, daß die Funktionsfähigkeit der damit ausgerüsteten Bauteile gewährleistet werden kann, möglich geworden.

Die Erfindung bezieht sich des weiteren auf alle Massen und Verbundwerkstoffe, die auf Basis der erfindungsgemäßen Plastisole gefertigt werden können sowie auf deren Verwendung im baulichen Brandschutz. Die technischen Verwertungsmöglichkeiten der Erfindung sollen anhand der nachfolgenden Beispiele erläutert werden, ohne daß diese nur annähernd das potentielle Anwendungsspektrum abgrenzen können.

Beispiel 1

Ein intumeszierender Plastisolansatz von 300 kg wurde wie folgt hergestellt.

Unter einem Dissolver-Schnellrührer wurden 67,5 kg Weichmacher vom Typ Disflamol TKP (Trikresylphosphat) und 6 kg Solvenon PM (Methylpropylenglykol) vorgelegt. Unter mäßigen Umdrehungen von 300 bis 400/min. werden jetzt portionsweise 121 kg Aluminiumtrihydroxid (Mischung aus den Typen Apyral 1, Apyral 15 und Apyral 25), 3 kg Zinkborat und 3 kg vom Sn(0)-Stabilisator zugeben. Anschließend wird das ganze bei Umdrehungen von 1800/min. ca. 8 Minuten intensiv durchgerührt, danach die Umdrehungen der Dissolver-Scheibe auf ca. 500/min. runtergefahren und die Mischung mit 32 kg blähfähigem Naturgraphit (Typ Luh mit mind. 95 % C) ergänzt und bei diesen Umdrehungen noch weitere 3 Minuten durchgerührt.

Die erhaltene homogene, gut fließende Mischung wird jetzt in ein Planetenrührwerk übergeführt und unter Zugabe von 67,5 kg PVC-Pulver (Typ Hostalit P 4472) zu einem rakelfähigen Plastisol aufgearbeitet. Die Rührzeiten in dem langsam laufenden Planetenmischer sollten mindestens 30 Minuten betragen. Die erhaltene Plastisolmischung wird in bekannter Weise über ein 0,30 mm Sieb filtriert und bei einem Vakuum von ca. 20 mbar entlüftet. Der Anteil der brandschützenden Eigenschaften beträgt 52 Gew.-% und unter Berücksichtigung des Sn-Stabilisators, der auch brandschützende, insbesondere aber rauchunterdrückende Eigenschaften aufweist, sogar 53 Gew.-%.

Das fertige Plastisol wird jetzt über eine Zylinder-Messer-Rakeleinrichtung auf ein 1 m breites Glasvlies vom Typ microlith SH 41/1, mit einer Schichtstärke von 1 mm aufgebracht und in einem 10 m langen Umluftofen angeliert.

Die Vorschubgeschwindigkeit beträgt dabei 1 m/min. und die Ofentemperatur 120°C. Die ca. 1 mm starke, asymetrische Feuerschutzbahn besitzt ein Flächengewicht von ca. 1,4 kg/m² und kann in dieser Form in leichten Brandschutzbauteilen verwendet werden. Es besteht aber auch die Möglichkeit im Umkehrverfahren eine Doppelbahn zu fertigen, indem auf die Vliesseite dieser Bahn in einem weiteren Verfahrensschritt eine ca. 1 mm starke Plastisolschicht aufgerakelt wird und das ganze noch einmal im Umluftofen bei 140°C und einem Vorschub von 1 m/min. geliert wird. Die so erhaltene 1 m breite Doppelbahn besitzt eine Stärke von 2 mm, was der im baulichen Brandschutz üblichen Standardstärke entspricht.

Die schwarze, glatte Feuerschutzbahn ist schwer entflammbar (Klassifizierung B 1 nach DIN 4102 - Brandschachtprüfung bzw. M1 nach NF 92-503 "Essai au Bruleur électrique"). Der Aufschäumfaktor, gemäß Richtlinie des DIBt /400°C, 20'/ beträgt >10 und der Blähdruck ca. 0,2 N/mm².

Aufgrund der Zusammensetzung ist das Produkt wasserfest (nach 6-wöchiger Wasserlagerung wurde keine Minderung der wichtigsten branschützenden Eigenschaften, wie Aufschäumverhalten und Blähdruck festgestellt) und damit steht dem baulichen Brandschutz ein flexibles Produkt zur Verfügung, daß auch in Feuchträumen oder im Außenbereich eingesetzt werden kann. Im letzteren Fall sollte aber eine direkte Bewitterung vermieden werden.

Die Bahn kann aber auch mit Rollmessern zu Feuerschutzstreifen bzw. -bändern geschnitten werden. Derartige Streifen mit den Abmessungen 7 x 2 mm wurden erfolgreich in brandhemmenden Feuerschutztüren T-30 und mit den Abmessungen 15 x 2 mm in T-60 Türen getestet.

Beispiel 2

Ein intumeszierender Plastisolansatz in der Größenordnung von 300 kg wurde analog zu Beispiel 1 bereitgestellt.

Unter dem Dissolver werden wie zuvor 67,2 kg Disflamol TKP und 6 kg Solvenon PM vorgelegt. Unter mäßigen Umdrehungen (300 - 400/min.) werden jetzt portionsweise 159 kg einer pulvrigen Feuerschutzmischung, bestehend aus Ammoniumphosphat, Polyalkohol und Dicyandiamid und 0,6 kg vom Eisenoxidbraun 3298 zugegeben und unter Umdrehungen von 2000 U/min. ca. 8 Minuten intensiv dispergiert. Die Temperatur der Mischung stieg dabei von 22°C auf 31°C. Nach Umfüllen in ein langsam laufendes Planetenrührwerk und Abkühlen auf 22°C können jetzt 67,2 kg vom PVC-Pulver Hostalit P 4472 zugegeben und 30 Minuten durchgerührt werden.

Die braune, rakelfähige Paste enthält über 53 Gew.-% Feuerschutzkomponenten und wurde wie zuvor auf ein 1 m breites Glasvlies vom Typ microlith SH 41/1 aufgerakelt und im Umkehrverfahren zu einer armierten Feuerschutzbahn von 2 mm Stärke aufgearbeitet. Das Flächengewicht der Bahn beträgt ca. 2,5 kg/m², der Aufschäumfaktor > 11 und es wurde kein nennenswerter Blähdruck gemessen. Auch mit diesem Verbundwerkstoff wurden der Nachweis der Schwerentflammbarkeit sowohl nach Anforderungen der DIN 4102 als auch der NF 92 - 503 erbracht. Die Feuerschutzkomponenten bestehen hier aber aus teilweise wasserlöslichen Bestandteilen, so daß ein Einsatz im Außenbereich oder in Feuchträumen nicht möglich ist.

Beispiel 3

Ein Intumeszenzplastisol mit starken Blähdruckeigenschaften wird wie folgt bereitgestellt.

Einem Weichmachergemisch bestehend aus 48 kg Genomol TBEP (Tributoxyethylphosphat und 24 kg Santicer 148 (Isodecylphosphat) werden unter dem Dissolver portionsweise 165 kg Blähgraphit vom Typ Tropag - MBS und 3 kg vom Sn(0)-Stabilisator zugegeben und bei ca. 1500 U/min. ca. 5 Minuten dispergiert.

Nach Umfüllen in den Planetenmischer wird die Graphitdispersion mit 42 kg Hostalit PA 5470/5 und 18 kg Hostalit SA 1062/7 ergänzt und 1/2 Stunde durchgerührt.

Die erhaltene hochkonzentrierte Intumeszenzpaste, mit einem Gehalt an Feuerschutzkomponenten von 56 Gew.-%, wird danach auf ein spezielles Trägervlies, mit einer Schichtstärke von 1 mm aufgerakelt und im Umluftofen bei einem Vorschub von 0,8 m/min. und 140°C geliert. Dieses Trägervlies besteht aus einer 15 mm starken Alufolie, die einerseits mit einer Polyesterschicht und andererseits mit einer Polyethylenschicht kaschiert ist, in das noch eine Polyestervliesarmierung von ca. 40 g/m² integriert ist. Auf das letztere wird eine ca. 1,2 mm starke Plastisolschicht aufgerakelt und geliert. Der so gefertigte Schichtverbundwerkstoff besteht bei einer Gesamtstärke von ca. 2,1 mm aus insgesamt 5 Lagen und weist eine Reihe technisch sehr interessanter Eigenschaften auf.

Der Aufschäumfaktor, gemessen nach 20 Minuten, bei 400°C, beträgt mit einer Auflast von 5 g/cm² ca. 45, ohne Auflast erreicht er sogar Werte über 60. Der Blähdruck erreicht hier Werte von über 1,2 N/mm², was von keinem derzeitigen Marktprodukt auch nur annähernd erreicht wird. Die Auswaschrate betrug nach 6-wöchiger Wasserlagerung nur 0,6 Gew.-%, was keinen Einfluß auf das Aufschäumen zeigte und beim Blähdruck konnten danach sogar leicht verbesserte Werte gemessen werden. Dieses Produkt kann damit auch im Außenbereich eingesetzt werden, da die witterungsbeständige Alu-Folie einen wirksamen Oberflächenschutz darstellt.

Durch seine außerordentlichen Blähdruckeigenschaften ist dieses Produkt insbesondere zum Einsatz in Brandschutzmanschetten und anderen Absperrvorrichtungen, die im Brandfall durch den Blähdruck ausgelöst werden, geeignet.

Beispiel 4

Ein Intumeszenzplastisol mit besonders hohem Aufschäumverhalten kann wie folgt bereitgestellt werden.

Einem Weichmachergemisch, bestehend aus 48 kg Genomol TBEP und 24 kg Santicer 148, wird unter dem Dissolver portionsweise 125 kg einer pulvrigen Feuerschutzgrundmischung (Ammoniumphosphat, Polyalkohol und Dicyandiamid) und 40 kg von Madurit 150 MW (Melamin-Formaldehydharz) zugegeben und bei 1800 U/min. ca. 8 Minuten dispergiert. Nach Abkühlen auf 20°C und Umfüllen in einen Planetenmischer kann die Dispersion mit 42 kg Hostalit PA 5470/5 und 18 kg Hostalit SA 1062/7 ergänzt und weitere 1/2 Stunde durchgerührt werden. Nach der Filtration und Entlüftung kann durch Aufrackeln auf ein Glasvlies vom Typ microlith SH 50/2 im Umkehrverfahren eine Feuerschutzbahn gefertigt, bei der man von einem Analogprodukt, zu der nach Beispiel 2 gefertigten Bahn ausgehen kann. Im Vergleich zu der letzteren besitzt die neue Bahn ein geringeres Flächengewicht (ca. 2,2 kg/m²), dieselbe Brandklassifikation (B1 nach DIN 4102 und M1 nach NF 92-503) zeigt aber ein diametral besseres Aufschäumverhalten. Gemäß Richtlinie des DIBt wurden hier bei 400°C nach 20 Minuten ohne Auflast, Werte von über 40 gemessen.

Beispiel 5

Ein Intumeszenzplastisol-Ansatz in der Größenordnung von 300 kg kann analog den vorangegangenen Beispielen, nach folgendem Rezept, bereitgestellt werden:

| 1. | Genomol TBEP | 50 kg |
|---|---|---|
| 2. | Santicer 148 | 12 kg |
| 3. | Solvenon PM | 6 kg |
| 4. | Borsäure | 103 kg |
| 5. | Ammoniumphosphat | 20 kg |
| 7. | Blähfähiger Naturgraphit (Typ Luh) | 30 kg |
| 8. | Hostalit P 4472 | 72 kg |

Das fertige Intumeszenzplastisol wird mit ca. 2,2 kg/m² auf eine 4-lagige Trägerbahn aufgerakelt. Diese Trägerbahn besitzt einen ähnlichen Aufbau wie die im Beispiel 3 schon beschriebene, mit dem Unterschied, daß anstelle des Polyestervlieses ein ca. 50 g/m² starkes Glasvlies in die PE Schicht integriert ist. Im Umluftofen vom Typ Mohr, bei einer Ofentemperatur von 120°C und einem Vorschub von ca. 0,9 m/min., konnte eine gute Gelierung erreicht und die fertigen Bahnen danach in Abschnitten von 10 lfm. als Rollware konfektioniert werden.

Die fertiggestellte, hochflexible Brandschutzdampfsperre wurde an der Forschungsstelle für Brandschutztechnik an der Universität Karlsruhe, gemäß den Anforderungen der DIN 18234 Teil 1, "Baulicher Brandschutz im Industriebau; Dächer", erfolgreich getestet. Der geprüfte Flachdachaufbau bestand aus Trapezprofilblechen, der erfindungsgemäßen Brandschutzdampfsperre, einer 100 mm dicken Wärmedämmung aus Styroporplatten und 2 Lagen von Bitumenschweißbahnen. Dieser Dachaufbau enthält pro m² über 12 kg brennbare Produkte.

Durch die Schutzwirkung der eingesetzten Brandschutzdampfsperre, kann ein Durchbrand erfolgreich verhindert werden. 40 Minuten nach dem Zünden der Brandlast und nachdem zwischenzeitlich im Brandraum die Temperatur auf ca. 1000°C gestiegen war, konnte der Brandversuch mit dem Ergebnis "kein Durchbrand" positiv abgeschlossen werden.

Des weiteren wurden Einsatzmöglichkeiten dieses Produktes zum flächigen Brandschutz von Gefahrgutbehältern getestet. Zwei Bahnen wurden mit einem mittigen Drahtnetz zu einem flexiblen, mechanisch sehr widerstandsfähigen System zusammengebaut und im Kleinbrandofen einer Bauteilenprüfung nach DIN 4102 unterworfen. Nach 90 minütiger Beanspruchung nach der Einheits-Temperaturzeitkurve wurde am Außenblech eine max. Temperatur von 260°C und als Mittelwert aller Meßstellen 210°C gemessen.

Beispiel 6

Mit einem nach Beispiel 1 gefertigten Plastisol werden 20 mm starke Drahtnetzmatten getränkt und nach dem Abtropfen thermisch geliert. Durch die Beschichtung erhöhte sich das Flächengewicht der Matten um ca. 3 kg/m². Je zwei dieser Matten wurden mit 10 mm starken Abstandshaltern zu einem flexiblen, mechanisch hochbelastbaren Brand- und Schallschutzelement zusammengefügt.

Bei einem analog Beispiel 5 durchgeführten Brandversuch, konnte nach 90 Minuten im Außenbereich nur 180°C als Maximalwert und 148°C als Mittelwert aller Meßstellen gemessen werden.

Beispiel 7

Analog Beispiel 6 wird eine 18 mm starke PPI-Kunststoffmatte mit dem Intumeszenzplastisol nach Beispiel 1 getränkt. Durch diese Beschichtung erhöhte sich das Flächengewicht der PPI-Matten von ursprünglich 0,5 kg/m² auf 2,5 kg/m².

Je 2 dieser Matten wurden mit einem mittigen 3 mm starken Drahtnetz zu einem ca. 40 mm starken Brand- und Schallschutzelement zusammengefügt.

Der nach analog Beispielen 5 und 6 durchgeführte Brandversuch, ergab nach 90 Minuten am Außenblech einen Maximalwert von 250°C und einen Mittelwert von 230°C.

Beispiel 8

Ein hochkonzentriertes Plastisol wird, wie zuvor beschrieben, auf Basis von folgendem Rezept bereitgestellt:

| 1. | Genomol TBEP | 48 kg |
|---|---|---|
| 2. | Santicer 148 | 24 kg |
| 3. | Roh-Vermiculit | 45 kg |
| 4. | Melaminphosphat | 63 kg |
| 5. | Borsäure | 27 kg |
| 7. | Blähfähiger Naturgraphit (Typ "Luh") | 15 kg |
| 8. | Stabilisator ST (0) | 6 kg |
| 9. | Hostalit PA 5470/5 | 48 kg |
| 10. | Hostalit SA 1062/7 | 24 kg |

Dieses Plastisol wird anschließend im Umkehrverfahren auf ein Glasseidenrovinggelege vom Typ UC 300 PB aufgerakelt und geliert. In die erhaltene, hochflexible, dynamisch stark belastbare Feuerschutzbahn werden in Abständen von 30 - 40 cm Hohlstäbe aus Aluminium als Versteifungselemente integriert.

Mit dieser Bahn wurde die Öffnung des Kleinbrandofens verschlossen und mit der Einheits-Temperaturzeitkurve thermisch beansprucht. Der Durchbrand erfolgte im oberen Eckbereich des Prüfkörpers nach 38 Minuten.

Bei einem weiteren Brandversuch, bei dem die zusammengerollte Brandschutzbahn quasi als Feuerschutzrollade zwischen 2 F-Scheiben postiert war, konnte eine Standzeit von 36 Minuten erreicht werden. Diese Bahn kann damit in Form von Feuerschutzrolladen zur Aufteilung von Brandabschnitten in den Betrieben eingesetzt werden, wo fertigungstechnisch bedingt eine stationäre Brandschutzwand nicht erstellt werden kann oder auch zur provisorischen Abschirmung von Gefahrzonen und Gefahrgutvorräten. Ein ganz anderer Aspekt ist die Verwendung dieser Rolladen als integrierter Bestandteil leichter Feuerschutzverglasungen.

Beispiel 9

Isolierhalbschalen aus offenporigem Melaminharzschaum (Basotect - BASF AG) werden mit den Intumesplastisolen gemäß Beispiel 1 beschichtet. Die durchschnittliche Auftragsmenge beträgt dabei ca. 700 g/m². Nach der Gelierung besitzen die Halbschalen eine hochflexible, schwerentflammbare, wasserfeste Außenhaut, die deren Einsatz auch in Feuchträumen ermöglicht.

Beispiel 10

Sickendämmkeile aus Phenolharzschaum werden analog Beispiel 9 mit dem Intumeszenzplastisol gemäß Beispiel 1 beschichtet. Entsprechende Brandversuche mit Flachdachsystemen ergaben, daß der unter Hitzeeinwirkung entstehender Thermoschaum das schrumpfende Schaumvolumen kompensiert und damit im Brandfall verhindert, daß durch das Durchströmen zühdfähiger Gase, sekundäre Brandherde oder explosive Gasmischungen entstehen können.

Beispiel 11

Zwei rechteckige Blechkanister für brennbare Flüssigkeiten, mit einem Füllvermögen von 10 Liter, wurden für folgende Vergleichsversuche präpariert.

Der erste Kanister wurde außen allseitig mit einem handelsüblichen Unterbodenschutz, auf Basis von PVC-Plastisol, beschichtet, der zweite analog mit einem erfindungsgemäßen Intumeszenzplastisol folgender Zusammensetzung:

| 1. | Genomol TBEP | 19 Gew.-% |
|----|----------------|-----------|
| 2. | Santicer 148 | 10 Gew.-% |
| 3. | Melaminphosphat | 18 Gew.-% |
| 4. | Bariumborat | 12 Gew.-% |
| 5. | Blähglimmer | 6 Gew.-% |
| 6. | Blähgraphit-Tropag MBS | 4 Gew.-% |
| 7. | Stabilisator Su (0) | 2 Gew.-% |
| 8. | Hostalit PA 5470/5 | 18 Gew.-% |
| 9. | Hostalit SA 1062/7 | 11 Gew.-% |

Die Beschichtungsstärke betrug jeweils 2 mm. Die zur Hälfte mit 5 Liter Wasser gefüllten Kanister wurden in einem Kleinbrandofen auf einem Drahtgestell derart plaziert, daß sie konzentrisch von 4 großdimensionierten Gasbrennern beflammt wurden.

Nach Zündung der Brenner dauerte es 3 Minuten und 40 Sekunden bis das Wasser im ersten Behälter die Siedetemperatur erreichte, während dazu im brandgeschützten Kanister über 12 Minuten benötigt wurden. Mit diesem einfachen Versuch sollten in etwa die Bedingungen simuliert werden, die bei einem Kfz-Unfall mit Zündung des Treibstoffs zum Bersten bzw. zur Explosion des Treibstofftanks führen.

Beispiel 12

Die Zusammensetzung des Intumeszenzplastisols aus Beispiel 11 wird dahingehend geändert, daß der Anteil von Bariumborat auf 6 Gew.-% zurückgenommen wird und durch Zinkborat mit 4 Gew.-%, Zinkoxid mit 1 Gew.-% und Azodicarbonamid mit 1 Gew.-% ersetzt wird.

Das erfindungsgemäße Plastisol wird auf Kraftpapier, mit einer Stärke von ca. 0,7 mm aufgerakelt und im Umluftofen bei 170°C und einem Vorschub von 1,2 m/min. aufgeschäumt und geliert. Der erhaltene Schichtverbundschaumstoff kann u.a. als Verpackungsmaterial für Sprengstoffe und Munition eingesetzt werden.

**Patentansprüche**

1. Verfahren zur Herstellung von brandschützenden Verbundwerkstoffen unter Verwendung von hochkonzentrierten Intumeszenzplastisolen, dadurch gekennzeichnet, daß zunächst die Feuerschutzkomponenten in einem schnellaufenden Mischer in die Weichmacher dispergiert werden und die erhaltene homogene Paste, ggf. nach Abkühlung durch Zugabe von Kunstharz in einem langsam laufenden Mischer in ein hochkonzentriertes Intumeszenzplastisol überführt wird.

2. Verfahren nach Anspruch 1, dadurch gekennzeichnet, daß die Bereitstellung der Feuerschutzdispersionen vorzugsweise in einem Dissolver-Mischer, im Bereich von 1000 bis 2000 U/min. und deren Umwandlung in hochkonzentrierte Intumeszenzplastisole vorzugsweise in einem Planetenrührwerk bei Umdrehungen von ≦ 100 U/min., stattfindet.

3. Verfahren nach Anspruch 1 und 2, dadurch gekennzeichnet, daß die Intumeszenzplastisole vor deren Weiterverarbeitung ggf. durch an sich bekannte Verfahren filtriert und entlüftet werden.

4. Verfahren nach Ansprüchen 1 bis 3, dadurch gekennzeichnet, daß je nach vorgesehenem Anwendungsbereich die Feuerschutzkomponenten aus einer Mischung von intumeszierenden, ablativen (wasserabspaltenden) und ggf. auch blähdruckentwickelnden Bestandteilen zusammengesetzt werden.

5. Verfahren nach Ansprüchen 1 bis 4, dadurch gekennzeichnet, daß als intumeszierende Komponenten vorwiegend Mischungen auf Basis von Salzen der Phosphor-, Bor- oder Schwefelsäure verwendet werden.

6. Verfahren nach Ansprüchen 1 bis 4, dadurch gekennzeichnet, daß als ablative Bestandteile u.a. Artinit, Alumohydrocalcit, Benzoe- und Salicylsäure, Berylliumbiacetylacetomat, Dansonit, Ettringit, Hydromagnesit, Hydrotalcit, Magnesiumhydroxid, Nesquehonit, p-Dichlorbenzol, Zeolith, Zirconium (IV)-chlorid, Zirconylchlorid vorzugsweise Aluminiumtrihydroxide und/oder Dimelaminpyrophosphate verwendet werden können.

7. Verfahren nach Ansprüchen 1 bis 4, dadurch gekennzeichnet, daß als blähdruckentwickelnde Bestandteile Blähglimmer, Perlit, Rohvermiculit, Borophosphate, vorzugsweise Blähgraphite verwendet werden können.

8. Verfahren zur Fertigung hochflexibler Schichtverbundwerkstoffe gemäß Ansprüchen 1 bis 3, dadurch gekennzeichnet, daß die Intumeszenzplastisole über eine Zylinder/Messer-Einrichtung auf eine flächige Trägerbahn einmal oder ggf. im Umkehrverfahren mehrmals aufgerakelt werden und anschließend durch Hitzebeanspruchung geliert und/oder gehärtet werden.

9. Verfahren nach Anspruch 8, dadurch gekennzeichnet, daß als flächige Trägerbahn vorzugsweise Vliese aus anorganischen Fasern verwendet werden.

10. Verfahren zur Fertigung von Brandschutzdampfsperrbahnen, gemäß Ansprüchen 8 und 9, dadurch gekennzeichnet, daß in der flächigen Trägerbahn eine Metallfolie, vorzugsweise Aluminiumfolie, enthalten ist.

11. Verfahren zur Fertigung hochflexibler, intumeszierender Brand- und Schallschutzelemente, indem die Intumeszenzplastisole nach den Ansprüchen 1 bis 3 auf nicht thermoplastische, offenporige Strukturen wie Matten, Netze, Kassetten, Schäume und dergleichen aufgebracht werden und anschließend durch Hitzeeinwirkung geliert bzw. gehärtet werden.

12. Verfahren zum Schutz von Gefahrgutbehältern wie Chemikaliencontainer, Kraftfahrzeugtanks, auch in Form von Unterbodenschutz und Dichtungsmassen, dadurch gekennzeichnet, daß Intumeszenzplastisole gemäß den Ansprüchen 1 bis 4 auf die zu schützenden Oberflächen aufgebracht werden und anschließend unter Hitzeeinwirkung geliert bzw. gehärtet werden.

13. Verfahren zur Fertigung von flexiblen, intumeszierenden Schäumen, dadurch gekennzeichnet, daß die Intumeszenzplastisole gemäß den Ansprüchen 1 bis 4 zunächst durch Zusatz von 2 - 3 Gew.% Seifen- und/oder Silikonschaumbildner kalt aufgeschäumt werden und danach thermisch geliert bzw. gehärtet werden.

14. Verfahren zur Fertigung von flexiblen, intumeszierenden Schäumen, dadurch gekennzeichnet, daß den Intumeszenzplastisolen gemäß den Ansprüchen 1 bis 4 zusätzlich ein chemisches Treibmittel, vorzugsweise Azodicarbonamid, zugegeben wird.

15. Verfahren zur Fertigung von Brandschutztapeten, gemäß den Ansprüchen 13 und 14, dadurch gekennzeichnet, daß die aufgeschäumten Massen durch aufgeheizte Prägewalzen geformt werden.

16. Verwendung der nach den Ansprüchen 1 bis 15 gefertigten Verbundwerkstoffen und Intumeszenzplastisolen im baulichen Brandschutz.

Europäisches
Patentamt

**EUROPÄISCHER RECHERCHENBERICHT**

Nummer der Anmeldung

EP 95 10 9326

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-20 03 351 (CHEMISCHE WERKE MÜNCHEN OTTO BÄRLOCHER GMBH) <br> * Anspruch 1 * <br> --- | 1 | C08J3/205 <br> C08J3/18 <br> C09K21/00 |
| A | FR-A-2 453 882 (CHEMISCHE FABRIK KALK GMBH) <br> * Seite 1, Zeile 33 - Seite 2, Zeile 14 * <br> --- | 1 | |
| A | DATABASE WPI <br> Derwent Publications Ltd., London, GB; <br> AN 90-162854[21] <br> & SU-A-1 502 407 (IVAN FILM MAT. SYNTH-) <br> 23. August 1989 <br> * Zusammenfassung * <br> --- | 1 | |
| A | US-A-4 515 744 (STAMPER R.W. ET AL) <br> * Spalte 1, Zeile 65 - Spalte 2, Zeile 16 * <br> --- | 1 | |
| D,A | EP-A-0 256 967 (DR. WOLMAN GMBH) <br> * Anspruch 1 * <br> ----- | 1 | **RECHERCHIERTE SACHGEBIETE (Int.Cl.6)** <br><br> C08J <br> C08K <br> C09K |

Der vorliegende Recherchenbericht wurde für alle Patentansprüche erstellt

| Recherchenort | Abschlußdatum der Recherche | Prüfer |
|---|---|---|
| DEN HAAG | 24. November 1995 | Niaounakis, M |